# FASCICULE DE BREVET EUROPEEN

(11) **EP 3 626 544 B1**
(45) Date de publication et mention de la délivrance du brevet: **17.02.2021**
(21) Numéro de dépôt: 19198843.5
(22) Date de dépôt: 23.09.2019
(51) Int. Cl.: B60R 16/03, H01R 13/73

(54) **INTERFACE USB DESTINÉE À ÉQUIPER UN VÉHICULE DE TRANSPORT PUBLIC**
USB-SCHNITTSTELLE ZUR AUSRÜSTUNG EINES ÖFFENTLICHEN TRANSPORTFAHRZEUGS
USB INTERFACE INTENDED FOR EQUIPPING A PUBLIC TRANSPORT VEHICLE

(30) Priorité: 24.09.2018 FR 1858649
(43) Date de publication de la demande: 25.03.2020
(73) Titulaire: ALSTOM Transport Technologies, 93400 Saint-Ouen (FR)
(72) Inventeur: VAYSSE, Christophe, 75013 PARIS (FR); BITARD, Adrien, 92190 MEUDON (FR)
(74) Mandataire: Lavoix

(56) Documents cités:
- EP-A1- 3 244 508
- CN-A- 104 716 687
- US-A1- 2008 272 260
- US-A1- 2018 062 407

## Description

La présente invention concerne une interface USB, destinée à équiper un véhicule de transport public.

Certains passagers de véhicule de transport public ont pour habitude d'utiliser un appareil électronique, notamment un smartphone, durant le transport.

En vue d'améliorer le confort de ces passagers, on connait déjà, dans l'état de la technique, notamment d'après CN 104 716 687A ou EP 3 244 508, une interface USB destinée à équiper un espace passagers d'un véhicule de transport public, permettant notamment aux passagers de recharger la batterie de leur appareil électronique, ou de le connecter à au moins un autre appareil pour toute autre raison. Une telle interface USB est toutefois généralement difficile à intégrer dans l'espace passagers.

La présente invention a notamment pour but d'améliorer la situation, en proposant une interface USB permettant une intégration, une maintenance et une accessibilité plus simple que dans l'état de la technique.

A cet effet, l'invention a notamment pour objet un véhicule ferroviaire selon la revendication 1..

Le boitier étant intégré dans l'espace passager par collage sur l'une des parois latérales, cette intégration est très simple à réaliser. En outre, l'accessibilité à l'interface est meilleure que dans le cas où l'interface serait intégrée à un élément présentant une autre fonction, telle qu'une barre de maintien.

Par ailleurs, il apparait que l'interface USB selon l'invention peut être intégrée facilement sur un véhicule de transport préexistant, alors que les solutions de l'état de la technique ne peuvent habituellement être intégrées que dans du matériel neuf.

De manière optionnelle, le boitier de support comporte au moins une face latérale, à travers laquelle passe le câblage.

Un véhicule de transport public selon l'invention peut comporter en outre l'une ou plusieurs des caractéristiques suivantes, prises seules ou selon toutes combinaisons techniquement envisagables.
- La paroi latérale à laquelle est collé le boitier de support comporte au moins un vitrage, le boitier de support étant collé à ce vitrage.
- Le vitrage étant encadré par au moins un montant, le boitier de support est collé sur le vitrage à proximité de ce montant, le câblage s'étendant au moins en partie le long de ce montant.
- Le véhicule de transport public comporte au moins une réglette cache-câble, agencée au moins en partie le long dudit montant, et logeant le câblage s'étendant le long de ce montant.
- Le véhicule de transport public comporte au moins un organe de commande d'ouverture de porte, l'organe de commande d'ouverture comprenant un bouton poussoir ménagé sur un boitier de commande, le boitier de commande présentant une forme générale sensiblement identique à celle du boitier de support.

L'invention sera mieux comprise à la lecture de la description qui va suivre, donnée uniquement à titre d'exemple et faite en se référant aux figures annexées, parmi lesquelles :
- la figure 1 représente partiellement et schématiquement un véhicule de transport public comprenant une interface USB, selon un exemple de mode de réalisation de l'invention ;
- la figure 2 représente schématiquement l'interface USB équipant le véhicule de la figure 1.

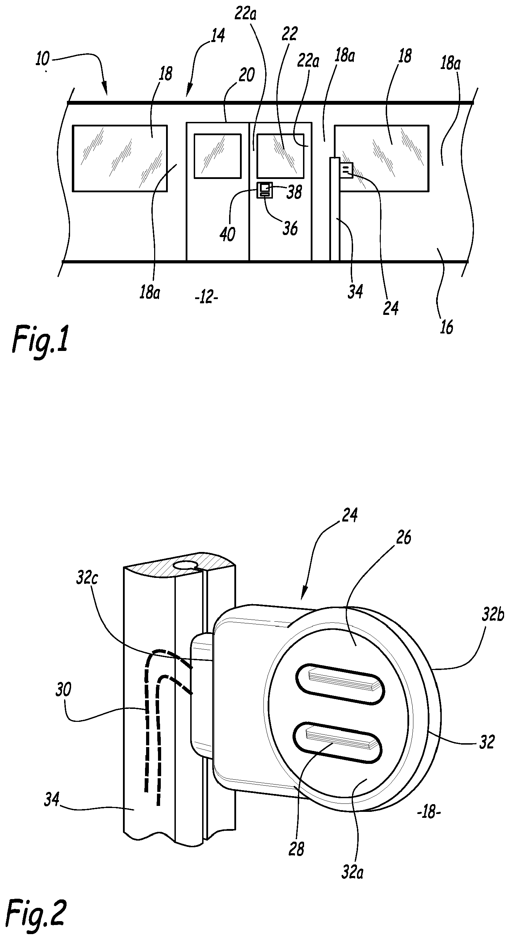

On a représenté partiellement, sur la figure 1, un véhicule de transport public 10 selon un exemple de mode de réalisation de l'invention. Le véhicule de transport public 10 est par exemple un véhicule de transport urbain, tel qu'un tramway, un métro ou un bus, ou en variante est un véhicule ferroviaire quelconque. Tout autre véhicule de transport public est également envisageable.

Le véhicule de transport 10 comporte un espace passagers 12 délimité par deux parois latérales 14 dont l'une est représentée sur la figure 1.

De manière classique, la paroi latérale 14 comporte au moins un panneau 16 délimitant des ouvertures pour au moins un vitrage 18 et pour au moins une porte 20. De manière optionnelle, la porte 20 peut également comporter au moins un vitrage 22.

Chaque vitrage 18, 22 est encadré par au moins un montant 18a, 22a, par exemple formé par une partie de la paroi latérale 14, respectivement de la porte 20, ou par un élément rapporté sur la paroi latérale 14, respectivement sur la porte 20.

Le véhicule de transport 10 selon l'invention comporte au moins une interface USB (acronyme anglais pour « Universal Serial Bus ») 24 pour liaison avec un appareil électronique.

L'interface USB 24 est représentée plus en détail sur la figure 2.

L'interface USB 24 comporte un organe électronique 26 comprenant au moins une prise USB 28, par exemple deux prises USB 28, et des éléments de connectique (non représentés) propres à relier chaque prise USB 28 à un câblage 30.

Le câblage 30 est relié à un autre appareil, par exemple susceptible de fournir de l'énergie. Ainsi, il est par exemple possible de recharger une batterie d'appareil électronique, en branchant cet appareil électronique sur la prise USB 28.

L'interface USB 24 comporte par ailleurs un boitier de support 32, comprenant une première face 32a depuis laquelle la prise USB 28 est accessible, et une seconde face 32b opposée à la première.

La seconde face 32b comprend au moins une partie plane de collage, destinée à être collée à l'une des parois latérales 14. L'interface USB 24 peut ainsi être agencée à une hauteur facilement accessible par un passager, notamment à un passager debout ou en variante à un passager assis.

Avantageusement, la seconde face 32b est collée sur l'un des vitrages 18, 22. En effet, il apparait qu'un dispositif fixé à un vitrage est généralement moins sujet au vandalisme qu'un même dispositif fixé à un autre élément du véhicule.

Le boitier de support 32 comporte par ailleurs au moins une face latérale 32c, à travers laquelle passe le câblage 30. Ainsi, le câblage 30 peut courir depuis les éléments de connectique jusqu'audit autre appareil.

Il est à noter que le boitier de support 32 est collé sur le vitrage 18, 22 de préférence à proximité de l'un 18a, 22a des montants correspondants. Le câblage 30 s'étend alors le long de ce montant 18a, 22a, et parfois au-delà de ce montant 18a, 22a, jusqu'à un sol de l'espace passager, et/ou le long de la paroi 14.

De préférence, le câblage 30 est logé dans au moins une réglette cache-câble 34, agencée au moins en partie le long dudit montant 18a, 22a.

Le véhicule de transport public 10 comporte par ailleurs au moins un organe de commande d'ouverture de porte 36. Cet organe de commande d'ouverture 36 comprend un bouton poussoir 38 ménagé sur un boitier de commande 40.

Dans ce cas, de manière avantageuse, le boitier de commande 40 présente une forme générale sensiblement identique à celle du boitier de support 32. Ainsi, il est possible de fabriquer le boitier de support 32 avec le même moule que celui utilisé pour le boitier de commande 40, ce qui facilite la fabrication de ce boitier de support 32 et réduit son coût de fabrication.

On notera que l'invention n'est pas limitée au mode de réalisation précédemment décrit, mais pourrait présenter diverses variantes.

## Revendications

1. Véhicule de transport public (10), comprenant un espace passagers (12) délimité par deux parois latérales (14), comportant au moins une interface USB (24) pour liaison avec un appareil électronique, l'interface USB (24) comportant :
- un organe électronique (26) comprenant au moins une prise USB (28), et des éléments de connectique propres à relier chaque prise USB (28) à un câblage (30),
- un boitier de support (32), comprenant une première face (32a) depuis laquelle la prise USB (28) est accessible, et une seconde face (32b) opposée à la première (32a), la seconde face (32b) comprenant au moins une partie plane de collage, destinée à être collée à l'une des parois latérales (14),
**caractérisé en ce que** que la seconde face (32b) du boitier de support (32) est collée à l'une des parois latérales (14).

2. Véhicule (10) selon la revendication 1, dans lequel le boitier de support (32) comporte au moins une face latérale (32c), à travers laquelle passe le câblage (30).

3. Véhicule de transport public (10) selon la revendication 1 ou 2, dans lequel la paroi latérale (14) à laquelle est collé le boitier de support comporte au moins un vitrage (18, 22), le boitier de support (32) étant collé à ce vitrage (18, 22).

4. Véhicule de transport public (10) selon la revendication 3, dans lequel, le vitrage (18, 22) étant encadré par au moins un montant (18a, 22a), le boitier de support (32) est collé sur le vitrage (18, 22) à proximité de ce montant (18a, 22a), le câblage (30) s'étendant au moins en partie le long de ce montant (18a, 22a).

5. Véhicule de transport public (10) selon la revendication 4, comportant au moins une réglette cache-câble (34), agencée au moins en partie le long dudit montant (18a, 22a), et logeant le câblage (30) s'étendant le long de ce montant (18a, 22a).

6. Véhicule de transport public (10) selon l'une quelconque des revendications précédentes, comportant au moins un organe (36) de commande d'ouverture de porte, l'organe de commande d'ouverture (36) comprenant un bouton poussoir (38) ménagé sur un boitier de commande (40), le boitier de commande (40) présentant une forme générale sensiblement identique à celle du boitier de support (32).

## Patentansprüche

1. Fahrzeug des öffentlichen Verkehrs (10), aufweisend einen Fahrgastraum (12), welcher durch zwei Seitenwände (14) abgegrenzt ist, aufweisend mindestens eine USB-Schnittstelle (24) zur Verbindung mit einer elektronischen Vorrichtung, wobei die USB-Schnittstelle (24) aufweist:
- eine Elektronikeinrichtung (26), welche mindestens einen USB-Anschluss (28) und Verbindungstechnikelemente, welche dazu geeignet sind, jeden USB-Anschluss (28) mit einer Verkabelung (30) zu verbinden, aufweist,
- eine Trägergehäuse (32), welches eine erste Fläche (32a), von welcher aus der USB-Anschluss (28) zugänglich ist, und eine der ersten (32a) entgegengesetzte zweite Fläche (32b) aufweist, wobei die zweite Fläche (32b) mindestens einen ebenen Abschnitt zum Kleben aufweist, welcher dazu bestimmt ist, an eine von den Seitenwänden (14) angeklebt zu werden,
**gekennzeichnet dadurch, dass** die zweite Fläche (32b) des Trägergehäuse (32) an eine von den Seitenwänden (14) angeklebt ist.

2. Fahrzeug (10) gemäß dem Anspruch 1, wobei das Trägergehäuse (32) mindestens eine Seitenfläche (32c) aufweist, durch welche die Verkabelung (30) hindurch verläuft.

3. Fahrzeug des öffentlichen Verkehrs (10) gemäß dem Anspruch 1 oder 2, wobei die Seitenwand (14), an welche das Trägergehäuse angeklebt ist, mindestens eine Verglasung (18, 22) aufweist, wobei das Trägergehäuse (32) auf diese Verglasung (18, 22) geklebt ist.

4. Fahrzeug des öffentlichen Verkehrs (10) gemäß dem Anspruch 3, wobei die Verglasung (18, 22) durch mindestens einen Pfeiler (18a, 22a) eingerahmt ist, wobei das Trägergehäuse (32) auf die Verglasung (18, 22) in der Nähe des Pfeilers (18a, 22a) geklebt ist, wobei sich die Verkabelung (30) sich zumindest teilweise entlang des Pfeilers (18a, 22a) erstreckt.

5. Fahrzeug des öffentlichen Verkehrs (10) gemäß dem Anspruch 4, aufweisend mindestens eine Kabelversteckleiste (34), welche zumindest teilweise entlang des Pfeilers (18a, 22a) vorgesehen ist und die Verkabelung (30), welche sich entlang des Pfeilers (18a, 22a) erstreckt, unterbringt.

6. Fahrzeug des öffentlichen Verkehrs (10) gemäß irgendeinem der vorhergehenden Ansprüche, aufweisend mindestens eine Einrichtung (36) zum Steuern des Öffnens einer Tür, wobei die Einrichtung zum Steuern des Öffnens (36) einen Druckknopf (38) aufweist, welcher an einem Steuergehäuse (40) vorgesehen ist, wobei das Steuergehäuse (40) eine generelle Form, welche zu dem des Trägergehäuses (32) im Wesentlichen identisch ist, aufweist.

## Claims

1. Public transport vehicle (10), comprising a passenger space (12) delimited by two lateral walls (14), including at least one USB interface (24) for connection with an electronic apparatus, the USB interface (24) comprising:
- an electronic member (26) comprising at least one USB port (28), and connection elements which are able to connect each USB port (28) to cabling (30),
- a support box (32) comprising a first face (32a) from which the USB port (28) is accessible, and a second face (32a) opposite the first (32a), the second face (32b) comprising at least one planar adhesive part, intended to be glued to one of the lateral walls (14),
**characterised in that** the second face (32b) of the support box (32) is glued to one of the lateral walls (14).

2. Vehicle (10) according to claim 1, in which the support box (32) comprises at least one lateral face (32c) through which the cabling (30) passes.

3. Public transport vehicle (10) according to claim 1 or 2, in which the lateral wall (14) to which the support box is glued comprises at least one glass panel (18, 22), the support box (32) being glued to this glass panel (18, 22).

4. Public transport vehicle (10) according to claim 3, in which, the glass panel (18, 22) being framed by at least one mounting (18a, 22a), the support box (32) is glued on the glass panel (18, 22) close to this mounting (18a, 22a), the cabling (30) extending at least in part along this mounting (18a, 22a).

5. Public transport vehicle according to claim 4, comprising at least one cable-concealing strip (34), fitted at least in part along said mounting (18a, 22a), and housing the cabling (30) which extends along this mounting (18a, 22a).

6. Public transport vehicle (10) according to any of the preceding claims, comprising at least one door-opening control member (36), then opening control member (36) comprising a push button (38) fitted on a control box (40), the control box (40) having a general shape substantially identical to that of the support box (32).
